(19) Europäisches Patentamt
European Patent Office
Office européen des brevets

(11) **EP 3 696 771 A1**

(12) **EUROPEAN PATENT APPLICATION**

(43) Date of publication:
**19.08.2020 Bulletin 2020/34**

(51) Int Cl.:
**G06T 7/00** (2017.01)   **G06N 3/04** (2006.01)
**G06N 3/08** (2006.01)   **G06N 5/04** (2006.01)

(21) Application number: **19156903.7**

(22) Date of filing: **13.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventor: **Munoz Delgado, Andres Mauricio**
**71272 Renningen (DE)**

Remarks:
Amended claims in accordance with Rule 137(2) EPC.

(54) **SYSTEM FOR PROCESSING AN INPUT INSTANCE, METHOD, AND MEDIUM**

(57)    A system (100) is disclosed for processing an input instance. The system comprises a data interface (120) for accessing a trained model (040) and at least one anchor instance (060); and a processor subsystem (140). The processor subsystem is arranged to obtain the input instance and a classification of the input instance according to the trained model and determine a mask for the input instance, the mask indicating modifications to the input instance relevant to the obtained classification. Determining the mask comprises optimizing at least: a classification score of a perturbed instance according to the trained model, the perturbed instance being obtained by applying the mask to the input instance, and a difference between values of one or more latent features of the trained model applied to the perturbed instance and the values of the one or more latent features of the trained model applied to the at least one anchor instance.

Fig. 2

**Description**

**FIELD OF THE INVENTION**

The invention relates to a system for processing an input instance, e.g., an input image, to a trained model. The invention further relates to a computer-implemented method of processing an input instance. The invention further relates to a computer-readable medium comprising instructions to perform the method.

**BACKGROUND OF THE INVENTION**

In order to improve reliability of manufacturing process, reduce downtime, and minimize waste of resources, it is important to inspect manufactured objects for failures. In optical quality inspection systems, such failures may be detected from images of the manufactured objects, e.g. with machine learning. It is not just important to detect failures, but also to know why a machine learning model detected a failure, e.g., to understand whether the conclusion of the machine learning model was correct and/or what was the root cause of the detected failure. More generally, understanding how a model arrived at its conclusion relates to the problems of model verification, e.g., analysing whether the right model was built, and model validation, e.g., analysing whether the model was built right. For instance, it is known in the art that various state-of-the-art machine learning models, e.g., neural networks, can be tricked into providing false, high confidence predictions. This puts into question their true generalization performance. Hence, there is a need to establish the degree to which models can be verified and validated, e.g. the degree to which a model has learned a desired input-to-output relationship.

For example, in machine and deep learning, in many cases, good metrics and practices to measure this effect are not available. Existing machine learning models may be based on limited, and thus inherently biased, datasets, producing models that are over-parametrized in comparison to the amount of data available. This may result in a gap between what a model has actually learned and what the implementer thinks the model has learned.

Various explainability techniques exist that aim to improve model verification/validation by showing how a model reached its conclusion. However, existing methods are generally largely qualitative, e.g., highlighting supposedly important regions of an image without quantitatively measuring the importance. Existing techniques may also be affected by noisy outputs and/or unjustifiable attributions to innocuous image regions, thereby severely undermining their added value. For example, in trying to understand why a picture of a cat was misclassified as a dog, existing techniques will typically provide an image as an explanation that neither looks like a cat, nor a dog.

In "Interpretable explanations of black boxes by meaningful perturbation" by Ruth Fong and Andrea Vedaldi, arXiv preprint arXiv:1704.03296, 2017 (incorporated herein by reference), a framework is proposed for learning different kinds of explanations of why a machine learning algorithms classifies an image in a particular way. In particular, the framework can be used to identify which regions of an image are used by a machine learning model to produce an output value. A so-called deletion game is considered where the goal is to find the smallest part of an image whose removal leads to a significant drop in classification score.

**SUMMARY OF THE INVENTION**

In accordance with a first aspect of the invention, a system for processing an input instance is proposed as defined by claim 1. In accordance with a further aspect of the invention, a method of processing an input instance is proposed as defined by claim 14. In accordance with a further aspect of the invention, a computer-readable medium is provided as defined by claim 15.

The above aspects of the invention involve a trained model. An example of a trained model is a classifier used in an optical quality inspection system to classify an image of a manufactured product as "OK" or "not OK". However, the techniques described herein may also be readily applied in other application domains than manufacturing such as automotive, e.g., to detect whether it is safe for a highly automated driving vehicle to cross a pedestrian crossing; robotics, e.g., to inspect incoming sensor data or predict results of movements of the robot; or medical, e.g., to locate an organ or determine a diagnosis based on a medical image. It will be understood that in these, and other, application domains, it is relevant to know how a machine learning model arrived at its conclusion.

Generally, as is known in machine learning, a trained model may be a model built from training data in order to provide a model output, e.g., a prediction or a decision. By training the model, it may provide such predictions or decisions without being explicitly programmed to do so. Typically, the trained model here is a classifier, e.g., a model that classifies new instances into a set of categories based on a training dataset comprising instances whose categories are known. In an embodiment, the trained model is an image classifier. The trained model may be a binary classifier or a multiclass classifier. However, the trained model can also be trained on a dataset of instances whose categories are unknown, e.g., obtained by clustering/automatic classification. In various embodiments, the trained model comprises a neural network, e.g., a deep neural network and/or convolutional neural network (CNN). However, this is not necessary, e.g., other types of models that have a latent space may be used.

The above aspects also involve an input instance and at least one anchor instance. Generally, an instance may be a single object on which the trained model may be applied. Instances are also sometimes called examples, cases, records, samples, etc. In various embodiments, the input instance and/or the at least one anchor instance comprise sensor data. In an embodiment, the various instances comprise images, e.g., of an optical quality inspection system, a medical image analysis system, etc. The instances may also comprise image data, video data, sound data, etcetera. An input instance may be represented by a feature vector comprising multiple feature values, e.g., pixels/voxels of an image, frequency amplitudes of a sound fragment, etcetera. The at least one anchor instance may be selected by a user, e.g., predefined. For instance, as discussed below, the at least one anchor instance may be the input instance itself. The at least one anchor image may also be determined automatically, as elaborated on below.

The above aspects also involve obtaining the input instance and a classification of the input instance according to the trained model. The input instance may be obtained in various ways, e.g., from a storage, from a computer network such as a Local Area Network or the Internet, or from a sensor. The classification may be obtained by applying the trained model to the obtained input instance but may also be otherwise obtained, e.g., provided along with the input instance. For example, the input instance may be comprised in the training dataset on which the trained model was trained. Its classification may be a classification provided by the trained model or a ground truth classification used to train the trained model.

The above aspects also involve a mask for the input instance. Masks are sometimes also called heatmaps. The mask may indicate modifications to the input instance. For instance, the mask may indicate portions of the input instance to which a modification may be applied. Interestingly, the modifications may include not just removing information from the input instance, e.g., removing of fuzzing out of parts of the input instance, but also adding information to the input instance, e.g., inserting data into or replacing part of the input instance. For instance, feature values, e.g., pixel values or audio frequencies, may be increased, decreased, replaced in whole or part by another feature value, etc. Different kinds of modifications may be indicated for different portions of the input instance, e.g., the mask may indicate that some regions of an image should be darkened whereas other regions should be lightened. This may allow parts of the input instance to be overwritten in a flexible way, e.g., by inserting new objects into the instance regardless of what was there before. Other modifications relevant to object recognition tasks on images include colour saturation, blur, colour desaturation, Gaussian noise, etc. Typically, which medication or modifications to be applied to which part of the input instance is determined by a joint optimization as discussed below. The mask may indicate modifications to individual feature values of the input instance, e.g., pixels, but may also be less fine-grained, e.g., block-wise.

Modifications may be indicated in the mask with respect to one or more perturbation targets, e.g., an all-black or an all-white image. The input image may be modified to obtain a perturbed instance by masking the input instance by at least one such perturbation target instance according to the mask. For instance, the mask may indicate whether, or to what extent, to replace a part of the input instance by a corresponding part of the perturbation target, e.g., according to a weight comprised in the mask. For images, the perturbation targets may also include, e.g., a blurry version of the input image. For audio data, perturbation targets may be defined in the frequency domain, e.g., a silent perturbation target, a garbled version of the input audio data, or a perturbation target with sound uniformly distributed over frequencies. Many variations will be apparent. The perturbation targets may be accessed, e.g., using a data interface, but this is not necessary, e.g., an all-white or silent perturbation target may be used implicitly. The perturbation targets may be predefined.

The mask may be determined in order to indicate modifications to the input instance that are relevant to the obtained classification. For instance, the mask may indicate portions of the input instance to modify in order to affect the way the trained model reaches the classification and/or the classification that the trained model provides. For instance, the modifications may lead to a different classification or at least to a significant drop in a confidence score/confidence measure for the classification, e.g., as measured by the classification score as discussed below. Hence, the mask may indicate what it would take for the model to reach a different conclusion on the input instance. The modifications may also, for instance, lead to an increased confidence in the obtained classification, hence indicating what it would take for the model to be surer of its classification. Generally, applying the mask to the input instance leads to a perturbed instance.

The above measures also involve a classification score of the perturbed instance according to the trained model. The classification score may be a classification score with a respect to the obtained classification, e.g., the classification score may be indicative of whether the trained model, on input the perturbed instance, outputs the same classification as that of the input instance. In various cases, the trained model may be configured to provide a classification as well as a confidence score, or confidence measure, of that classification. In such cases, the classification score can be based on that confidence score. Various known types of trained model provide confidence scores, e.g., a softmax probability layer of a neural network, a distance to a decision boundary of a Support Vector Machine, etc. For instance, a binary classifier may assign a confidence score $s$ of recognizing a certain class, e.g., a value between 0 and 1. If the input instance belongs to that class, the classification score may be equal to $s$ whereas if the input instance does not belong to that class, the value s may be inverted, e.g., 1-s. Classification scores can also be determined for multiclass classifiers, e.g., some multiclass classifiers provide confidence scores for each possible class, in which case the classification score of the perturbed instance may be selected as the confidence score of the class to which the input instance belongs. The classification score can also simply indicate whether the trained model classifies the perturbed instance in a same class as the input instance, e.g., in such cases, use of a confidence measure is not needed.

Interestingly, the above measures also involve a difference between values of one or more latent features of the trained model when applied to the perturbed instance compared to when applied to the at least one anchor instance. Latent features may be features of the latent space of the trained model, e.g., internal features of the model that are separate from the feature values of the input instance and computed while applying the model. Such features may provide an abstracted, more semantic, and/or compressed representation of the instance to which the model is applied. For instance, the one or more values of latent features of a neural network may comprise activations, e.g., weights, of nodes of some or all hidden layers of the neural network. In other words, the latent feature values may comprise one or more activation volumes of the neural network at various layers. Comparing latent features of the perturbed instance to those of anchor instances may allow to take semantic difference to the anchor instances into account. The difference can be determined using any suitable difference measure, e.g., a L0, L1, or L2 norm of a vector of latent feature value differences.

The latent space is generally unstructured or at least no particular structure of the latent space is used. For instance, in some embodiments, the trained model is a neural network that does not comprise a variational auto-encoder or a generative adversarial network. Interestingly, using the latent features to compute the difference may not require or comprise any qualitative assessment of what has been learned by any particular set of latent features, e.g., a neuron, filter, or layer of a neural network.

The above measures also involve carrying out an optimization to determine the mask, involving at least the classification score and the difference between latent feature values. The optimization may aim to determine a mask that optimizes both the classification score and the difference. For instance, the optimization may minimize/maximize the classification score given a constraint on the difference, e.g., a minimum, a maximum, a range, etcetera. Similarly, the optimization may minimize/maximize the difference given a constraint on the classification score. The optimization may also jointly optimize the classification score and the difference, e.g., by minimizing a loss function over the mask that comprises the classification score and the difference. Any suitable optimization technique may be used, e.g., stochastic gradient descent or its variants. The optimization may be heuristic and/or may arrive at a local optimum.

The inventors have found that determining the mask for the input instance as recited by the independent claims, results in masks that provide improved interpretability of the trained model. By taking into account both the classification score of the perturbed instance and the difference between values of latent features of the perturbed instance compared to at least one anchor instance, a mask is obtained that not only indicates modifications that are relevant to the classification of the input instance, but also take into account semantic characteristics of the one or more anchor instances. Generally, more meaningful perturbed instances may be obtained that may be closer to real instances and hence more readily interpretable.

Specifically, perturbed instances that have unlikely activations in the latent space may indicate a poor semantic match between the perturbed instance and the at least one anchor instance, and hence may be penalized by the optimization. On the other hand, perturbed instances that have expected activations in the latent space may be favoured, effectively enabling the creation of semantic information when determining the mask. For example, if the reason for a classification decision is that information, in the form of an object, or part of an object, is missing from the image, then a valid explanation may attempt to reconstruct the missing object to such a degree of accuracy that the model changes its classification decision. For example, in providing a mask and/or perturbed image that explains why a cat was misclassified as a dog, explanations may be favoured that actually look like a cat or a dog. Note that the use of latent feature values allows an object of an anchor image that is missing in the input instance to be reconstructed at a different location than in the anchor image, e.g., since the latent feature values may indicate presence or absence of an object in the anchor image more or less independently of the exact location of the object, especially if relatively high-level latent features are used.

The performed optimization also provides a quantitative measure of the importance of the explanation that was found, in the form of at least the classification score and/or the difference between latent feature values. For example, the classification score, e.g., the difference in classification between the input instance and the perturbed instance, may quantify the value or strength of the perturbation, whereas the difference between latent feature values may indicate the extent of similarity obtained between the perturbed image and the at least one anchor image.

Improvements in interpretability may be observed in various types of applications. For instance, the techniques may be applied to images of sparse scenes and/or images with simple image statistics such as grayscale images. Interestingly, in such settings the optimization as set out above may be able to capitalize on the fact that the lack of information is information by itself, e.g., the reason for a classification decision can be that an object or part of an object is not present. By optimizing with respect to an anchor instance that does contain the missing information, the information may in effect be inserted into the perturbed image. Hence, the technique is not just applicable, for instance, to object classification for dense image scenes, in which information can be deleted relatively easily, but also to sparse scenes where this is harder, as often occurs, e.g., in industrial optical inspection systems, and non-vision tasks. Moreover, by optimizing according to the latent feature value difference, it may be avoided to optimize with respect to other kinds of metrics that may be unnatural in various settings, e.g., metrics that force masks that are blob-like and/or have sparse activations.

Optionally, the optimizing comprises minimizing the classification score and the difference between the values of the latent features. For instance, the optimization may comprise minimizing a loss function that is increasing in the classification score and the difference. This way, masks may be favoured that result in a drop in the classification score, e.g., a change in the classification, while at the same time masks may be favoured with latent features similar to those of the at least one anchor image, e.g. masks resulting a perturbed instances that is semantically similar to the at least one anchor instance.

Optionally, optimization comprises maximizing the classification score. Conceptually, maximizing the classification score correspond to a goal of finding those parts of the input instance that are needed to reach the correct classification. In such cases, the difference between the latent feature values may for instance be minimized to preserve the semantics of the anchor instance.

Optionally, determining the difference between the values of the latent features comprises determining an average value of a latent feature of the trained model over multiple anchor instances. For example, each value of a latent feature of the training model applied to the multiple anchor instances may correspond to an average over the multiple anchor instances. The use of an average over multiple anchor instances may favour semantic similarity for each of the multiple anchor instances. For instance, a sample of representative images of a class may be used, or a sample of representative images of different classes may be used. This may result in a perturbed instance that is semantically similar to, e.g., looks like, known instances, e.g., unusual perturbed instances are penalized.

Optionally, the at least one anchor instance comprises one or more of: the input instance, an instance having the same classification as the input instance, and an instance having a different classification than the input instance. For instance, the classification of the instance may be a ground truth classification or a classification according to the trained model. Using the input instance as an anchor may encourage masks that minimally change the input instance, e.g., in terms of high-level features or semantics as defined by the latent features. For instance, the difference between values of latent features may take into account a subset of later layers of a neural network, in which case solutions preserving high-level semantic concepts characterizing the input instance may be favoured. Similarly, using an instance with the same classification may favour perturbed instances representing counterexamples that, from a high-level perspective, lie in the same class as the input instance. Using an instance with a different classification may favour masks highlighting differentiating/transformative factors that can convert the input instance into a different instance from a particular class. A user may select the at least one anchor instance according to their needs.

Optionally, the at least one anchor instance is determined automatically. For instance, the at least one anchor instance may be determined by selecting a candidate instance with a small a difference between values of one or more latent features of the trained model applied to the candidate instance and the values of the one or more latent features of the trained model applied to the input instance. For instance, the candidate instance may be selected from a set of candidate instances. Typically, the set of candidate instances all share a common classification. For instance, the candidate instances all have the same classification as the input instance, or they all have a same different classification, as discussed. For instance, the candidate instances may be all instances of a certain classification from the dataset on which the model was trained. The latent features used to compute the difference here may be the same as those used to compute the difference optimization as described above, however, it is also possible to use a different set of latent features. For instance, the difference can be computed based on activations in a neural network prior to the softmax layer, e.g., in the second-to-last layer. Various similarity measures can be used, as described above, e.g., cosine similarity.

By automatically selecting anchor instances with a high semantic similarity to the input instance, generally a more relevant mask is determined, e.g., objects inserted to the input instance correspond better to objects that are likely to occur in the input instance itself. Moreover, since the mask is more relevant, a mask is usually obtained that is smaller and hence easier to interpret. In effect, it is ensured that the optimization does not stray too far from the input instance. For instance, in optical quality inspection, small defects may result in a sample being classified as "Not OK"; by targeting small visual changes that have a large impact on classification, such small defects can be effectively found.

Optionally, the mask comprises a whitening mask for increasing an intensity of portions of the input image and a blackening mask for decreasing an intensity of portions of the input image. Determining the mask may comprise jointly optimizing the whitening mask and the blackening mask. For example, the whitening mask may be applied to the input image and an all-white perturbation target and the blackening mask may be applied to the input image and an all-black perturbation target. Combining a whitening mask and a blackening mask may in particular facilitate inserting and/or replacing objects into the input image, e.g., a greyscale image, since they allow dark image portions to be made lighter and light image portions to be made darker, depending on what was there in the input image.

Optionally, the input instance comprises sensor data, for instance, obtained from a sensor by means of an input interface. Such sensor data may comprise, for instance, image/video/radar/LiDAR/ultrasonic sensor data, etc. Classification of sensor data is being used for more and more critical applications, in such application domains as optimization of automated manufacturing processes, medical image analysis or diagnosis, etcetera, making it increasingly important to explain how the classifier arrived at its results.

Optionally, the determined mask and/or perturbed instance obtained by applying the determined mask to the input instance are output in a sensory perceptible manner to a user, e.g., via a screen or a speaker. For instance, the user may inspect the mask and/or perturbed instance to decide whether the reason for the classification made by the trained model was correct or not. For instance, the user may override or correct the classification of the trained model. Typically, the user may be an end user of the trained model, or a data scientist aiming to refine the trained model.

Optionally, the trained model may be re-trained using the perturbed instance obtained by applying the determined mask to the input instance. For instance, the perturbed instance may be included in a training set for re-training the trained model, or the trained model may be refined using the perturbed instance. For instance, a user may, upon inspection of the perturbed image, enter a desired classification of the perturbed image that may be used as a label of the perturbed image during the re-training. For instance, this may be part of an interactive process to iteratively refine the trained model. Accordingly, determining and classifying perturbed instances may allow a user to effectively explore and refine the decision boundary between different classifications, leading to an improved trained model.

Optionally, the input instance comprises a measurement of a product produced in a manufacturing process. For instance, the measurement may comprise an image of the product as produced, e.g., by an optical quality inspection component. The determined mask may be further classified into a predetermined set of possible anomalies, e.g., explanations or root causes for the classification. For instance, the possible anomalies may comprise failures in the manufacturing process, e.g., a component such as a weld or screw is missing or misplaced in the manufactured product. The possible anomalies may also comprise problems with the measuring equipment, e.g., wrong lighting conditions. Because the mask indicates modifications to the input instance relevant to the obtained classification, the mask is particularly suitable for determining anomalies, e.g., it is generally easier to classify the masks than the input instances themselves since the mask effectively selects the most relevant information for such a classification. The classification may be performed in various ways, for instance, based on a manually defined criterion, using a pretrained model, and/or a clustering into the set of anomalies. By design, the set of anomalies may be constrained to a discrete set of possible anomalies.

Optionally, at least one operating parameter of the manufacturing process may be adjusted based on the classification of the mask. For example, the manufacturing process may be paused or halted, or the speed or other operating conditions may be adjusted. For example, based on the classification, a control signal may be determined for controlling the manufacturing process, e.g., a control signal comprising parameter adjustments. The at least one operating parameter may be adjusted based on multiple classifications, e.g., the classifications can be input to a parameter optimization procedure. The operating parameters may be adapted to reflect the detected anomaly, for instance, to prevent the anomaly from occurring again or reduce its likelihood. Optimizing the manufacturing process may take place as a human-computer-interaction.

It will be appreciated by those skilled in the art that two or more of the above-mentioned embodiments, implementations, and/or optional aspects of the invention may be combined in any way deemed useful.

Modifications and variations of any computer-implemented method and/or any computer readable medium, which correspond to the described modifications and variations of a corresponding system, can be carried out by a person skilled in the art on the basis of the present description.

## BRIEF DESCRIPTION OF THE DRAWINGS

These and other aspects of the invention will be apparent from and elucidated further with reference to the embodiments described by way of example in the following description and with reference to the accompanying drawings, in which

Fig. 1 shows a system for processing an input instance by determining a mask for the input instance that indicates modifications to the input instance relevant to a classification according to a trained model;

Fig. 2 shows a detailed example of how a mask may be determined by optimizing at least a classification score and a difference between activations of hidden nodes with respect to application of the mask to the input instance;

Fig. 3 shows a detailed example of how a determined mask may be used to adjust control parameters of a manufacturing process;

Fig. 4 shows a method of processing an input instance by determining a mask for the input instance that indicates modifications to the input instance relevant to a classification according to a trained model;

Fig. 5 shows a computer-readable medium comprising data;

Fig. 6-11 show example results of applying techniques described herein to obtain a mask for an input instance in the context of a manufacturing process.

It should be noted that the figures are purely diagrammatic and not drawn to scale. In the figures, elements which correspond to elements already described may have the same reference numerals.

## DETAILED DESCRIPTION OF EMBODIMENTS

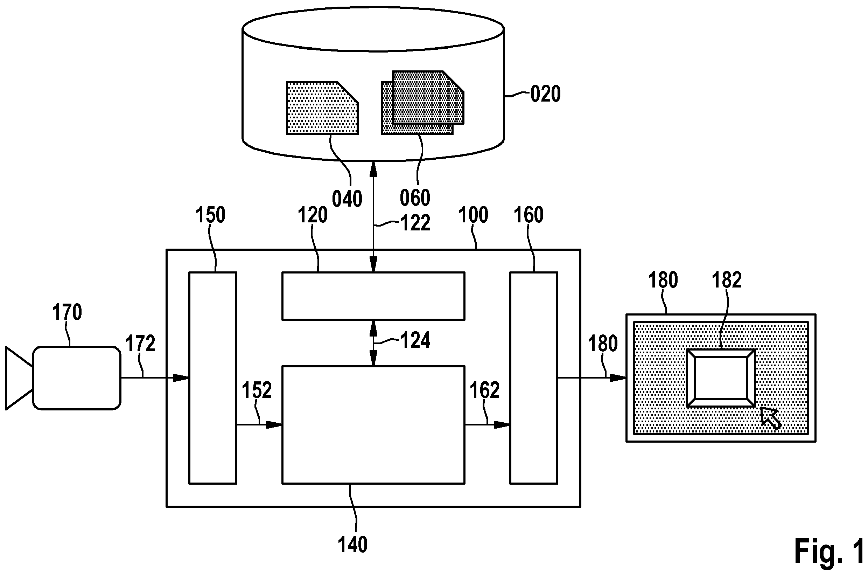

**Fig. 1** shows a system 100 for processing an input instance. The system 100 may comprise a data interface 120 and a processor subsystem 140 which may internally communicate via data communication 124. The processor subsystem 140 may be configured to, during operation of the system 100 and using the data interface 120, access trained model 040 and at least one anchor instance 060. For example, as shown in Fig. 1, the data interface 120 may provide access 122 to an external data storage 020 which may comprise said data 040, 060. Alternatively, the data 040, 060 may be accessed from an internal data storage which is part of the system 100. Alternatively, the data 040, 060 may be received via a network from another entity. In general, the data interface 120 may take various forms, such as a network interface to a local or wide area network, e.g., the Internet, a storage interface to an internal or external data storage, etc. The data storage 020 may take any known and suitable form.

The processor subsystem 140 may be further configured to, during operation of the system 100, obtain the input instance and a classification of the input instance according to trained model 040. The processor subsystem 140 may determine a mask for the input instance. The mask may indicate modifications to the input instance relevant to the obtained classification. Determining the mask may comprise optimizing at least a classification score of a perturbed instance according to the trained model 040, the perturbed instance being obtained by applying the mask to the input instance, and a difference between activations of hidden nodes of the trained model 040 applied to the perturbed instance and the activations of the hidden nodes of the trained model 040 applied to the at least one anchor instance 060.

As an optional component, the system 100 may comprise an image input interface 150 or any other type of input interface for obtaining sensor data from a sensor, such as a camera 170. The sensor data may be comprised in the input instance. For example, the camera may be configured to capture image data 172, processor subsystem 140 being configured to obtain the input instance 152 from image data 172 obtained via input interface 150.

As an optional component, the system 100 may comprise a display output interface 160 or any other type of output interface for outputting the determined mask and/or the perturbed instance obtained by applying the determined mask to the input instance 142 to a rendering device, such as a display 180. For example, the display output interface 160 may generate display data 162 for the display 180 which causes the display 180 to render the determined mask and/or the perturbed instance 142 in a sensory perceptible manner, e.g., as an on-screen visualisation 182.

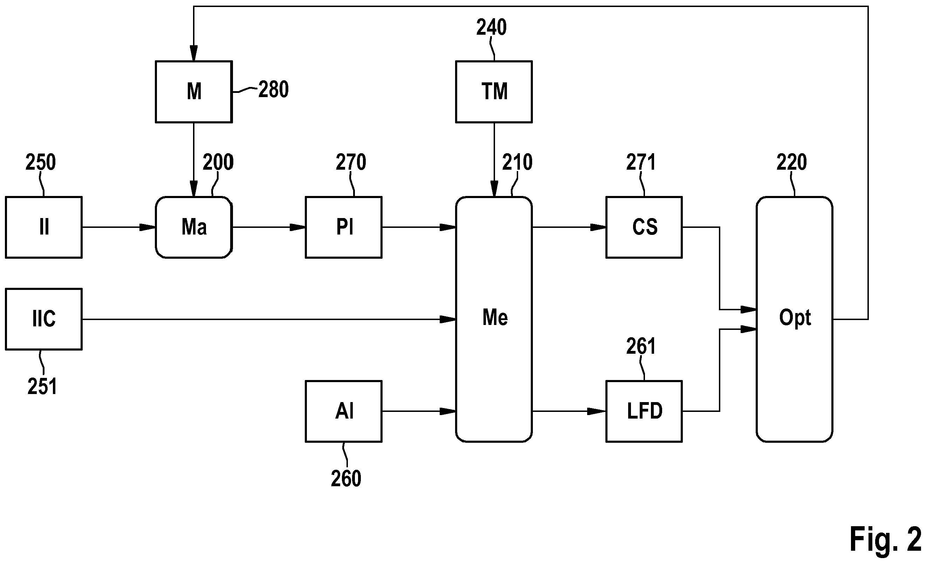

Various details and aspects of the operation of the system 100 will be further elucidated with reference to Fig. 2, including optional aspects thereof.

In general, the system 100 may be embodied as, or in, a single device or apparatus, such as a workstation, e.g., laptop or desktop-based, or a server. The device or apparatus may comprise one or more microprocessors which execute appropriate software. For example, the processor subsystem may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the functional units of the system, e.g., the data interface and the processor subsystem, may be implemented in the device or apparatus in the form of programmable logic, e.g., as a Field-Programmable Gate Array (FPGA). In general, each functional unit of the system may be implemented in the form of a circuit. It is noted that the system 100 may also be implemented in a distributed manner, e.g., involving different devices or apparatuses, such as distributed servers, e.g., in the form of cloud computing.

**Fig. 2** shows a detailed yet non-limiting example of how a mask may be determined for an input instance, for example, by the system 100 of Fig. 1. Various features in Fig. 2 are explained with reference to a system for image classification, but as the skilled person understands, this is not a limitation in that the techniques are readily applied to other kinds of instances, e.g., various types of sensor data as obtained, for example, from a sensor.

Shown in Fig. 2 is a trained model **TM**, 240, trained to classify input images. Trained model **TM** is a model with a latent space, e.g., a space of latent features. For instance, trained model **TM** may comprise a neural network, e.g., a deep neural network and/or a convolutional neural network (CNN).

Shown also are an input image **II**, 250, and a classification **IIC**, 251, of the input image according to the trained model. For instance, classification **IIC** may be obtained by evaluating trained model **TM** on input image **II**, or classification **IIC** may be a ground truth classification, e.g., of a training dataset from which trained model **TM** was trained.

A mask **M**, 280, may be determined for input image **II**. The mask **M** may indicate modifications to input image **II** relevant to the obtained classification **IIC**. By applying mask **M** to input image **II,** a perturbed image **PI**, 270, may be obtained. Mask application is shown as a process **Ma**, 200. Mask application **Ma** may comprise masking input image **II** by at least one perturbation target instance according to the mask **M.** For example, for each of the perturbation target images, mask **M** may comprise a perturbation mask with respect to the perturbation target image. The perturbation target images may be predetermined, effectively representing the rules according to which the input image **II** may be modified.

For example, a perturbation image may be the same size as input image **II**, and the perturbation mask with respect to a perturbation image may again be the same size. This is not necessary, however, e.g., the perturbation image and/or mask may be suitable upscaled/downscaled. A perturbation mask may, for each pixel of the image, indicate a degree to which the input image **II** should be replaced by a perturbation target. For instance, the degree may be a value between zero and one, one indicating to keep the input image and zero indicating to replace the input image by the perturbation target. Mathematically, the perturbed image $\Phi(x_0;m)$ according to a single perturbation target $\eta$ may be represented as $\Phi(x_0;m)(u)=m(u)x_0(u)+(1-m(u))\eta(u)$, where $u$ represents the pixel, $m$ represents the mask, and $x_0$ represents the input image. For example, applying an all-black perturbation target may darken pixels or add black pixels to the original image. Mask $m$ may, for instance, interpolate between the input image and the all-black image.

Applying multiple perturbation mask may be performed various ways, e.g., sequentially or in a single application. For example, with perturbation masks $m_1$, $m_2$ with respect to perturbation targets $\eta_1$, $\eta_2$, the perturbed image may be determined based on determining a result $\Phi_1(x_0;m_1)(u)$ of applying the first perturbation mask to the image and a result $\Phi_2(x_0;m_2)(u)$ of applying the second perturbation mask to the image, and summing up the effects $\Sigma_i(\Phi_i(x_0;m_i)(u)-x_0(u))$ of applying the respective masks, similarly for more than two perturbation masks.

For instance, mask **M** may comprise a whitening mask for increasing an intensity of portions of the input image and a blackening mask for decreasing an intensity of portions of the input image. For instance, the whitening mask can be a perturbation mask with respect to an all-white perturbation target and the blackening mask can be a perturbation mask with respect to an all-black perturbation target. For instance, a pixel may be made black the blackening mask indicating to replace the pixel by the all-black perturbation target and the whitening mask not indicating to replace the pixel by the all-white perturbation target, etc. Mask **M** may be determined by jointly optimizing the whitening mask and the blackening mask, as set out below.

Based on perturbed image **PI** obtained by applying mask **M** to input image **II**, a classification score **CS**, 271, may be determined. Classification score **CS** may score the perturbed image **PI** according to the obtained classification **IIC** of the input image **II**. For example, generally, a higher classification score **CS** may be assigned to perturbed image **PI** the better the image matches the obtained classification **IIC**. In this particular example, trained model **TM** may be a neural network, in which case classification score **CS** may be given by a softmax probability layer of neural network **TM**, e.g., classification score **CS** may be a difference in softmax output between input image **II** and perturbed image **PI.** Classification score **CS** may also be determined based on whether or not perturbed image **PI** is classified by trained model **TM** with obtained classification **IIC**, e.g., classification score **CS** can be equal to 1 if it is and equal to 0 if it is not. Determining classification score **CS** typically involves applying trained model **TM** to perturbed image **PI**, as exemplified by a model evaluation step **Me**, 210, in the image.

Mask **M** may be determined by performing an optimization **Opt**, 220, that optimizes at least classification score **CS**. For example, the optimization may favour classification scores **CS** indicating a mismatch between perturbed image **PI** and obtained classification **IIC**, e.g., low classification scores. For example, the optimization may comprise minimizing a loss function that is increasing in the classification score **CS**, e.g., includes classification score **CS** as a term with positive weight. This way, optimization **Opt** may favour determining masks **M** indicating modifications to input image **II** that lead to a change in classification, or at least to decreased confidence in the classification. On the other hand, the optimization may also favour classification scores **CS** indicating a match between the perturbed image **PI** and obtained classification **IIC**, in which case mask **M** may indicate parts of the image that were used to obtain the classification.

For example, optimization **Opt** may comprise an iterative optimization algorithm such as gradient descent, Newton iteration, etcetera. In each timestep of such an optimization, mask **M** may be applied to input image **II**, resulting in perturbed image **PI**. Hence, perturbed image **PI** is iteratively refined.

Interestingly, the optimization **Opt** may also optimize at least a difference **LFD**, 261, between one or more values of latent features of trained model **TM** applied to perturbed instance **PI** and the values of one or more the latent features of trained model **TM** applied to at least one anchor image **AI**, 260. In other words, difference **LFD** may measure a distance between latent space activations of trained model **TM** for the current perturbed image **PI** and that of the at least one anchor image **AI**. For example, a loss term based on difference **LFD** may be included in the loss function minimized by optimization **Opt**. For example, optimization **Opt** may comprise minimizing classification score **CS** and difference **LFD**. Hence, masks **M** may be favoured by the optimization that influence the classification and are semantically similar to the at least one anchor image **AI**, e.g., mask **M** may indicate modifications to input image **II** based on anchor image **AI** relevant to the classification.

For instance, trained model **TM** may comprise a neural network. Generally, when a neural network is trained, its latent space, e.g., space of weights of the hidden layers, may be shaped in such a way that it enables the model to minimize an error function effectively. Such an error may be measured, for instance, as a distance to a ground truth label activation. In doing so, a neural network, e.g., a deep neural networks, may learn a hierarchical decomposition of its input. In many cases, the latent space that encodes this hierarchy of features may be largely unstructured. Interestingly, difference **LFD** may nonetheless use the latent space activations without relying on quantitatively assessing what any individual neuron/filter/layer of the trained model has learned.

Mathematically, one way to compute difference **LFD** is by means of the following formula:

$$\mathcal{L}_{model\_activation\_l1} = \Sigma_l \left\| f\big(\Phi(p_0; m)\big)_l - f(t)_l \right\|_1.$$

In this formula, for instance, $p_0$ may refer to the input image **II**. $m$ may refer to mask **M**. Function $\Phi$ may denote masking **Ma** the input image **II** with mask **M** to obtain perturbed image **PI**. $l$ may index over parts of the latent space of the trained model, e.g., neural network layers. $f(X)_l$ may refer to an activation volume of a part of the latent space indexed by $l$ when computing response $X$. $t$ may refer to an anchor image **AI**, for example, $f(X)_l$ may denote a vector of values of latent features of at least part of the latent space of the trained model. Loss term **LFD** may be weighted in optimization **Opt** against other loss terms, e.g., according to a user-selected preference on how much importance should be placed on reconstructing the anchor.

Various choices can be made with respect to the above formula. For instance, instead of indexing over parts of the latent space, a single vector of latent features of the perturbed image **PI** and of the anchor image **AI** may be used. It is also possible to use a subset of the latent space of the trained model **TM**. For instance, trained model **TM** may comprise multiple neural network layers, in which case distance **LFD** may be computed over a strict subset of later layers of the neural network. This may favour masks with semantic similarity over masks with more literal correspondence, for example. Also, various types of distances can be used, e.g., one or more of a L1 distance, a $p$-norm, a Wasserstein distance, a KL distance, and a cosine dissimilarity may be used. Computing separate distances for different parts of the latent space, e.g., layer-by-layer, may be advantageous in terms of computational efficiency since the computation of various distance measures scales super-linearly in the number of latent features used.

In various embodiments, there are multiple anchor images **AI**. In this case, determining difference **LFD** may comprise determining an average value of a latent feature of the trained model over multiple anchor images. For example, $f(t)_l$ may denote an average over latent feature values of the multiple anchor images. Alternatively, multiple latent feature value difference terms may be included in optimization **Opt** corresponding to the multiple anchor images.

Anchor images **AI** may be chosen in various ways, e.g., the at least one anchor image **AI** may comprise one or more of: input image **II,** an image having the same classification **IIC** as the input image, and an image having a different classification than the input image **II**. The classification of the anchor image can be as given by the trained model or a ground truth classification, for instance. Different choices may be made, e.g., different anchor images may be chosen by a user, depending on the application.

For example, the at least one anchor image **AI** may comprise input image **II.** This may encourage optimization **Opt** to find masks **M** that minimally change the input image. For example, difference LFD may be restricted to later layers of a neural network, in which case mask **M** may be guided towards solutions that keep the high-level semantic concepts that characterize the input image.

The at least one anchor image **AI** may also, for example, comprise an image of the same class **IIC** as input image **II**. In this case, optimization **Opt** may look for counter-examples that could, from a semantic perspective, lie in the same class as the input image **II**.

The at least one anchor image **AI** may also, for example, comprise an image of a different class than input image **II**. For instance, in the case of binary classification, this image may be of the counter class. In such cases, optimization **Opt** may yield solutions that highlight differentiating and/or transformative factors for converting input image **II** into a different sample from a target class. For example, the mask may provide insight into how the model may be convinced to change its classification into a classification of a particular target class.

In various embodiments anchor images **AI** are selected automatically, e.g., from a set of candidate anchor images. The set of candidate anchor images may be the set of all images that were used to train model **TM** that have a certain classification, e.g., classification **IIC** or a different classification. Out of these candidates, a candidate anchor image may be selected with the smallest difference between values of one or more latent features of the trained model applied to the candidate instance and the values of the one or more latent features of the trained model applied to the input instance. As latent features to compute this difference, for instance, nodes of neural network **TM** prior to the softmax layer can be chosen. A possible similarity measure is cosine similarity, although various similarity measures described above may also be used. The difference may also be computed in the same way as the latent feature value difference of optimization **Opt**, as described.

Apart from classification score **CS** and difference **LFD**, various other factors may be included in optimization **Opt.** For example, in various embodiments, one or more of a mask size, a mask regularization, and an artefact elimination term may be optimized. For example, a loss function to be minimized by optimization **Opt** may be:

$$m^* = \min_{m \in [0,1]^\Gamma} \lambda_1 \|1 - m\|_1 + f_c\big(\Phi(x_0; m)\big) + \lambda_2 \sum_{u \in \Gamma} \|\nabla m(u)\|_\beta^\beta +$$

$$\mathbb{E}_\tau\big[f_c\big(\Phi(x_0(\cdot - \tau), m)\big)\big] + \sum_l \big\| f\big(\Phi(p_0; m)\big)_l - f(t)_l \big\|_1.$$

For example, the loss function of optimization **Opt** may favour masks that are small, as exemplified by the first term. This loss function may also favour masks that are regular, e.g., blob-like, as exemplified by the TV-regularization of the third term. As discussed above, the loss function may favour a change in classification with respect to input image **II** by including classification score **CS**, as exemplified by the second term, where $f_c(x)$ may refers an output classification score of input $x$ for class c in an output layer of trained model **TM**. The loss function may also include an artefact elimination term to cause mask **M** to not depend too greatly on local artefacts, e.g., by including a classification score of one or more jitterings of the mask, as exemplified in the fourth term by computing mask **M** as an average over jittered versions of the input image **II**. The optimization may also comprise difference **LFD** as shown by the fifth term. The loss function may be minimized, for instance, with known stochastic gradient descent techniques. Many variations are possible, e.g., the various terms of the above formula may be weighted, etc.

As a result of optimization **Opt**, a mask **M** and/or a perturbed image **PI** obtained by applying the determined mask to the input image **II** may be obtained. The determined mask **M** and/or the perturbed instance **PI** may be output in a sensory perceptible manner to a user. Hence, the user may obtain more readily interpretable information about modifications to input image **II** relevant to obtained classification **IIC.** The user may also, for instance, enter a desired classification of the perturbed instance **PI** which may be used to re-train and/or refine trained model **TM** using the perturbed instance **PI** and the desired classification.

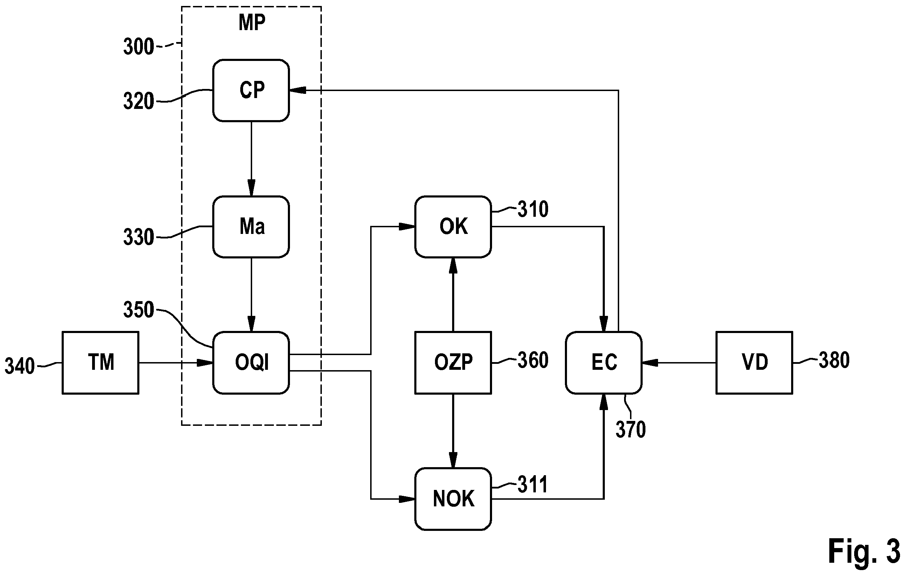

**Fig. 3** shows how various aspects of the invention may be exploited in the context of a manufacturing process **MP**, 300. In this case, a mask may be determined for an input instance that comprises a measurement of a product produced in manufacturing process **MP**. For example, the manufacturing process may be guided by an optical quality inspection system **OQI**, 350. Various aspects of the invention may be used to obtain a control signal for the manufacturing process **MP**, as explained below. The mask may be classified, for instance, into a predetermined set of possible anomalies, at least one control parameter of the manufacturing process **MP** being adjusted based on the classification of the mask.

As is known in the art of manufacturing engineering, manufacturing processes are often highly parameterized procedures, defining strict rules on how its physical systems operate in order to produce individual samples. For example, in an assembly line, factors of the manufacturing process may include quantity of applied pressure, heat, torque, force, etc. Hence, it is valuable to obtain insight into how varying these parameters affects, e.g. the production of NOK, Not OK, samples. For instance, applying too much pressure could fracture a sample, and the like. Such insight may lead to, for instance, a more efficient manufacturing process. Various aspects of the invention may be applied to gain explanations, e.g., determine anomalies, from a visual quality control system **OQI** that can be fed back to the manufacturing process itself, thereby closing the automation loop by incorporating knowledge, e.g., of how NOK samples are produced.

Shown in the figure is a trained model **TM**, 340, e.g., a learned discriminative model with a possibly unstructured latent space. Shown also is validation data **VD**, 380, e.g., comprising a set of input test and validation samples.

In manufacturing process **MP**, e.g., a manufacturing pipeline, the assembly/manufacturing process **Ma**, 330, may be dictated by a set of control/configuration parameters **CP**, 320. A quality control process **OQI**, 350, may inspect the samples output by the assembly/manufacturing.

In the quality control process, a trained classification model **TM** may be used to obtain a classification of produced samples, e.g., into **OK**, 310 and Not OK, **NOK**, 311 classes.

Depending on the classification of an input sample, a mask may be determined according to an embodiment, e.g., as described with respect to Fig. 2. Such a mask may show the changes required to turn an OK sample into a NOK sample and/or to turn a NOK sample into an OK sample. This may be an optimization process depending on a set of pre-set optimization parameters **OZP**, 360, e.g., for limiting the scope and variety of the possible explanations that can be created. For example, the optimization parameters **OZP** may comprise weights of terms in the loss function, e.g., $\lambda_1$, $\lambda_2$, allowing to effectively restrict the space of possible solutions into solutions that are considered useful. For instance, in an optical inspection scenario, small, localized masks intended to highlight cracks may be favoured. Optimization parameters **OZP** may also define what perturbations are be possible, e.g., whether a blackening mask, a whitening mask, a blurring mask, or a combination of the above are determined. Optimization parameters **OZP** may also define a scope from which the anchor instance is chosen. For instance, the anchor instance can be chosen manually by an operator, e.g., a NOK anchor and an OK anchor chosen depending on the classification on the input instance. The anchor instance can also be selected automatically, in which case a dataset from which the anchor image is selected can be specified in parameters **OZP.**

In step **EC**, 370, the produced explanation, e.g., mask, may be classified into a predetermined set of discrete possible explanations, e.g., anomalies, failures, and the like. For example, classifying the mask may comprise applying one or more predefined defined criteria, e.g., a criterium comprising that the explanation mask activates in a specific part of the input image. Classifying the mask may also comprise applying a pretrained model or performing a clustering into a set of explanations/anomalies produced by predefined validation data samples **VD**, for example.

The classification into the predefined set of explanations/anomalies may then be signalled back manufacturing process **MP** by adjusting at least one control/configuration parameter to reflect the newest explanations. For example, the signalling may be performed using known automation protocols. The adjustment can be according to a predetermined set of rules, e.g., if a particular anomaly is found as a root cause for a classification, then the system may be brought in a safe mode. As another example, if the explanation shows a sample with a particular physical defect in a specific location, then the operating parameters of the manufacturing process **MP** (applied pressure, heat, etc.) may be modified to specifically avoid such failures. Correspondence between explanations and operating parameter settings over multiple samples may also be used to train a machine learning system to learn optimal operating parameter settings.

By using a predefined set of anomalies, explanations may be constrained to a discrete set of possibilities, e.g., a physical defect in a specific location on the sample, a change in the control conditions such as lighting during the manufacturing process, etc. E.g., such a physical defect may be characterized by a mask highlighting essentially a specific region of the image whereas a change in lighting conditions may result in a mask highlighting essentially the whole image.

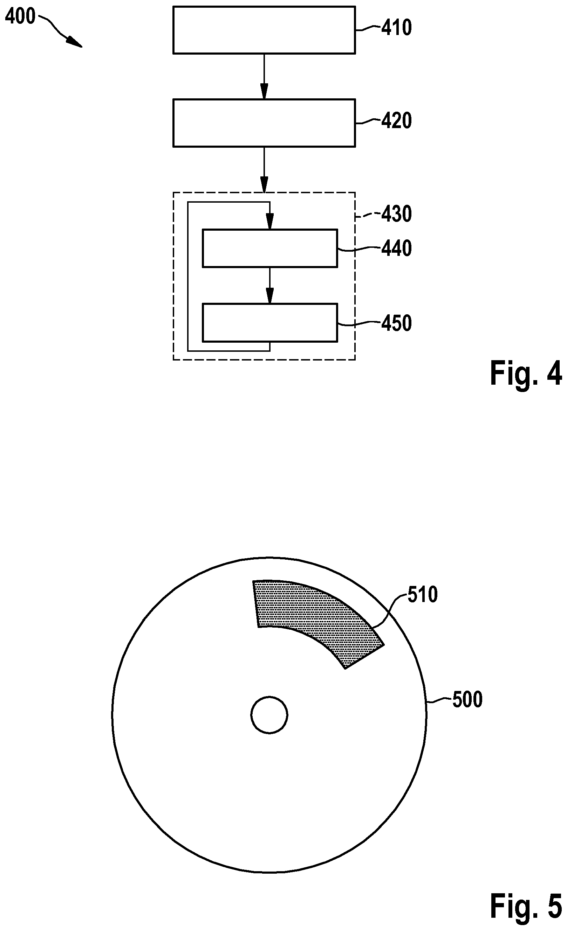

**Fig. 4** shows a block-diagram of computer-implemented method 400 of processing an input instance. The method 400 may correspond to an operation of the system 100 of Fig. 1. However, this is not a limitation, in that the method 400 may also be performed using another system, apparatus or device.

The method 400 may comprise, in an operation titled "ACCESSING TRAINED MODEL, ANCHOR INSTANCE", accessing 410 a trained model and at least one anchor instance. The method 400 may further comprise, in an operation titled "OBTAINING INPUT INSTANCE, CLASSIFICATION", obtaining 420 the input instance and a classification of the input instance according to the trained model. The method 400 may further comprise, in an operation titled "DETERMINING MASK", determining 430 a mask for the input instance, the mask indicating modifications to the input instance relevant to the obtained classification. Determining the mask may comprise optimizing at least a classification score of a perturbed instance according to the trained model and a difference between values of one or more latent features of the trained model applied to the perturbed instance and the values of the one or more latent features of the trained model applied to the at least one anchor instance. For example, determining 430 the mask may comprise, in an operation titled "APPLYING MASK", applying 440 the mask to the input instance to obtain the perturbed instance. Determining 430 the mask may further comprise, in an operation titled "COMPUTING LATENT FEATURE VALUE DIFFERENCE", computing 450 the difference between the values of the latent features of the trained model applied to the perturbed instance and the values of the latent features of the trained model applied to the at least one anchor instance. For example, determining 430 the mask may comprise an iterative optimization process including repeatedly performing step 440 and/or step 450.

It will be appreciated that, in general, the operations of method 400 of Fig. 4 may be performed in any suitable order, e.g., consecutively, simultaneously, or a combination thereof, subject to, where applicable, a particular order being necessitated, e.g., by input/output relations.

The method(s) may be implemented on a computer as a computer implemented method, as dedicated hardware, or as a combination of both. As also illustrated in **Fig. 5**, instructions for the computer, e.g., executable code, may be stored on a computer readable medium 500, e.g., in the form of a series 510 of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 5 shows an optical disc 500. Alternatively, the computer readable medium 500 may comprise transitory or non-transitory data 510 representing metadata as described elsewhere in this specification.

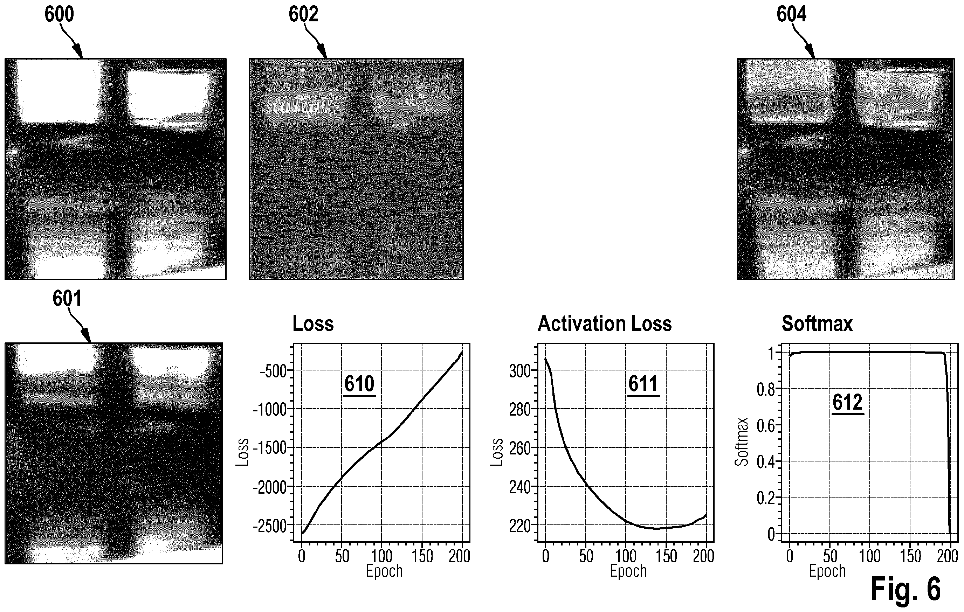

**Fig. 6-11** show several example results of applying the techniques described herein in order to analyse performance of a manufacturing process by optical quality inspection. Such a manufacturing process typically comprises multiple steps, in which a particular amount of time is reserved for each step. From an operational perspective, it is beneficial to minimize the time per step without harming the quality of the end product. For example, this may be achieved by performing a step faster, increasing pressure, etcetera. The effect of such changes on production is typically not well-understood. Masks and perturbed images as described herein improve this understanding by helping to understand why the manufacturing failed in a particular case. Likewise, understanding of how wear and tear of assembly parts affect the quality of the end product can be improved.

In the particular example shown in Fig. 6-11, the manufacturing process is for inserting a welding pin into a fixed structure. The classifier classifies whether such a welding pin is correctly inserted. The images show the gap between two vertical portions of the fixed structure where the welding pin is supposed to be inserted by the manufacturing process. The classifier, in this case a convolutional neural network, classifies input samples of manufactured welding pins into an OK class, representing correctly manufactured welding pins, and a NOK class, representing incorrectly manufactured welding pins. For example, a welding pin may be misplaced, may not be correctly attached to one of the sides of the fixed structure, or may not be present at all.

Fig. 6 shows an example of providing an explanation for a misclassification. Input instance 600 is a NOK image that was misclassified by the model as an OK. With the use of a NOK anchor instance 601, we can gain insight as to why the image was misclassified by highlighting the changes necessary that the model would need in order to provide a NOK classification. Here this is accomplished using a blackening mask 602. The optimization procedure automatically learns the distinguishing features of the anchor 601 and introduces them to the input image 600. In this example, this takes the form of the overcast "shadow" over the top portion of the weld body, shown in the top part of image 602. Applying this blackening mask to input instance 600 leads to perturbed image 604. With this change, the model makes a confident NOK prediction for image 604.

Anchor 601 was chosen automatically from the set of NOK images based on its similarity to the input image.

The loss, shown in graph 610, is the quantity which the optimization process tries to maximize by changing mask 602 and, in doing so, altering the input image 600. The activation loss, shown in graph 611, measures the similarity between the result at each time step and the anchor image 601. A low activation loss means the two are similar. The softmax graph 612 shows the classification output for the applied mask at each step during its optimization. A low softmax score refers to a NOK image, a high softmax score refers to an OK image.

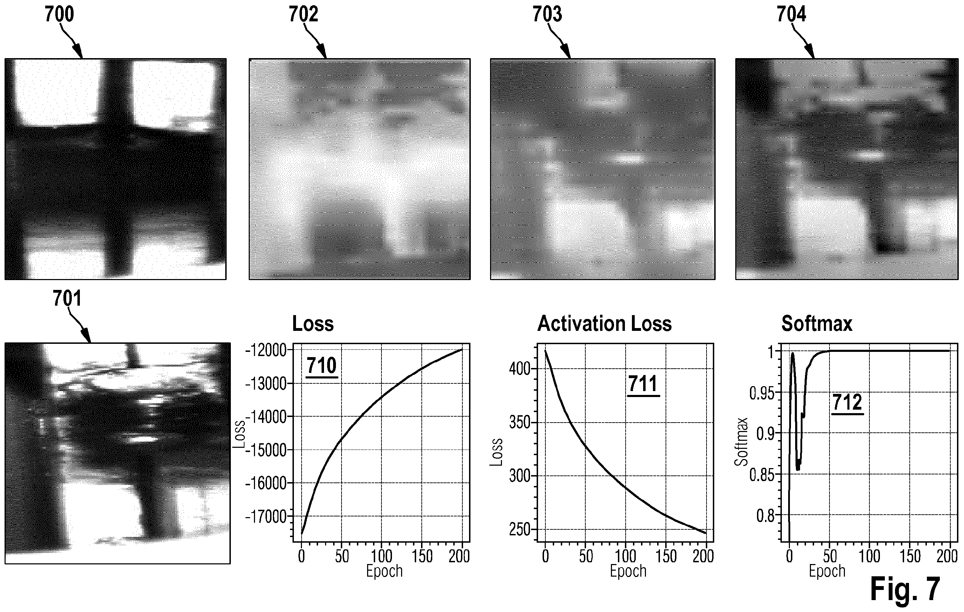

Fig. 7 shows an explanation for the NOK classification of sample 700. The optimization process transforms NOK sample 700 into an OK sample 704 using the given anchor 701 as a guide. The anchor is chosen automatically as the most similar image to the input NOK image from a subset of all OK images. The whitening mask 703 in particular shows the specific textures added to the weld body which are responsible for the classification decision. This can be concluded by observing at what point in the optimization process these textures are added, and correlating this with the given softmax output 712 at that point. Adding the required textures settles the slight uncertainty seen in the early iterations. A blackening mask 702 was also used.

As above, the softmax figure 712 shows the classification output for the applied mask at each step during its optimization. A low softmax score refers to NOK image, a high softmax score refers to an OK image. The loss 710 is the quantity which the optimization process tries to maximize by changing the masks and in doing so, altering the input image. The activation loss 711 measures the similarity between the result at each time step and the anchor. A low activation loss means the two are similar.

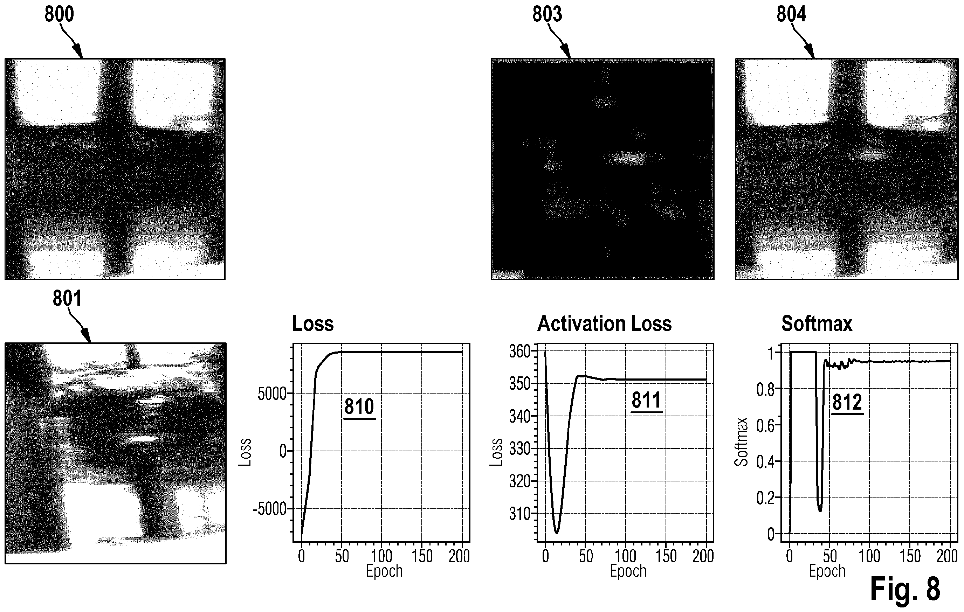

Fig. 8 shows a slightly different use for the anchor image. Here, the anchor image 801 has again been retrieved automatically from a set of OK images so as to maximize the similarity with the input NOK image 800. The result 804 shows the transformation from the given NOK sample into an OK sample using only the most relevant and salient information from the anchor, in this case the highlights on the weld body, shown in whitening mask 803. These features were selected automatically by the optimization process. The example shows how the optimization process has learned to adapt whitening 803 mask to recreate these features and apply them to the input sample 800, and shows overall how sensitive the model is to minor artefacts and features in the image.

As above, the softmax figure 812 shows the classification output for the applied mask at each step during its optimization. A low softmax score refers to NOK image, a high softmax score refers to an OK image. The loss 810 is the quantity which the optimization process tries to maximize by changing the masks and in doing so, altering the input image. The activation loss 811 measures the similarity between the result at each time step and the anchor. A low activation loss means the two are similar.

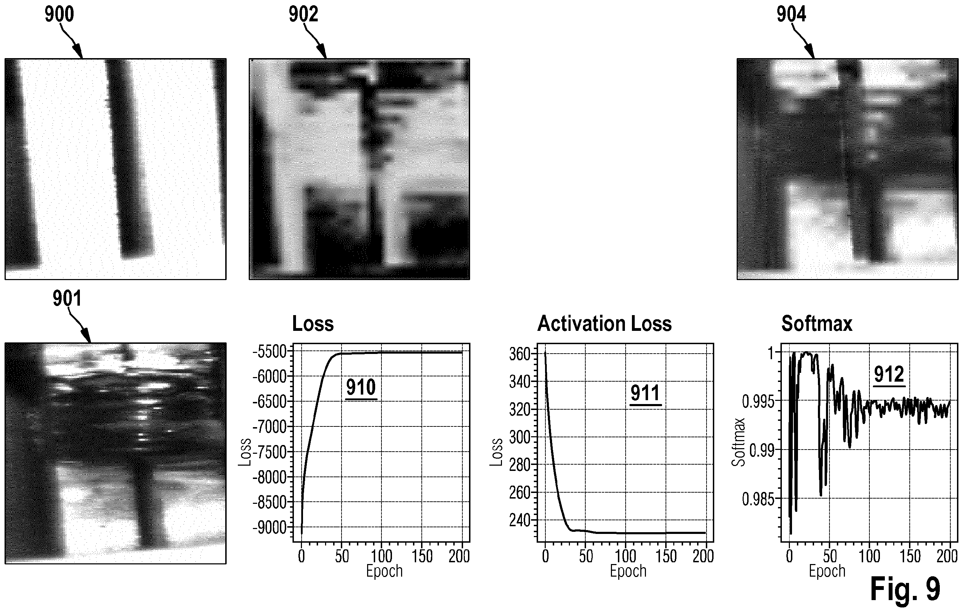

Fig. 9 shows the classification explanation for a NOK sample 900 where the welding has failed to start. The transformation takes place by adding black pixels via a blackening mask 902 in an automatic optimization procedure which transforms the original NOK sample 900 into an OK one 904. Anchor 901 is chosen automatically to guide this process. This particular example shows how the optimization has learned to recreate the weld body and textures on the body (horizontal highlights towards the top of the pin) in order to force the classifier to yield and OK classification.

The softmax figure 912 shows the classification output for the applied mask at each step during its optimization. A low softmax score refers to NOK image, a high softmax score refers to an OK image. In this particular example, already small additions of black pixels in the first set of iterations is enough to force an OK classification; as optimization continues, the procedure yields a more useful example that looks more similar to the OK image anchor 901. The loss 910 is the quantity which the optimization process tries to maximize by changing the masks and in doing so, altering the input image. The activation loss 911 measures the similarity between the result at each time step and the anchor. A low activation loss means the two are similar.

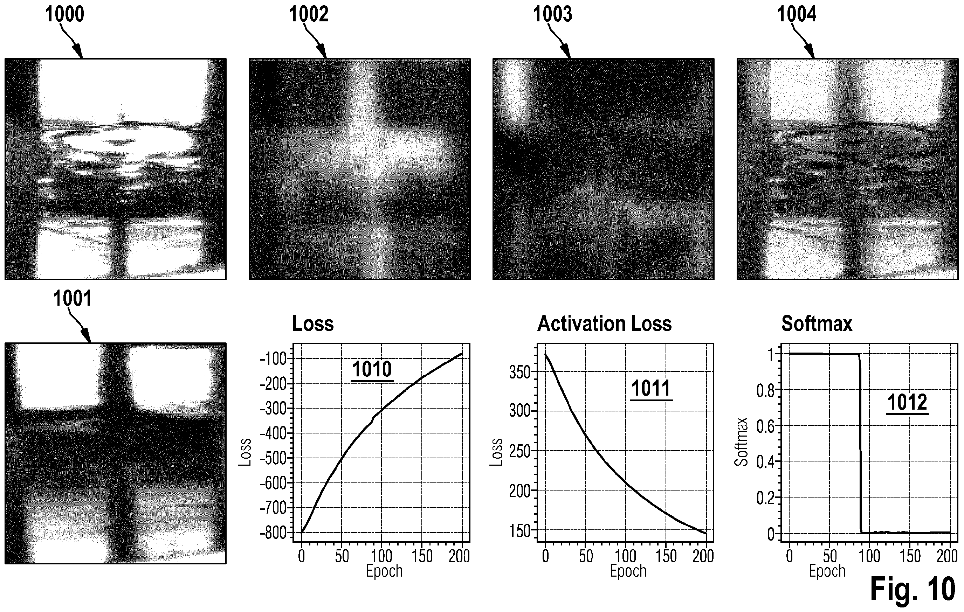

Fig. 10 demonstrates the model's sensitivity to the classification of the given OK sample 1000. Blackening mask 1002 and whitening mask 1003 are learned in an optimization process which is rewarded for model NOK feedback. The optimization is guided by the given anchor 1001, which is found automatically as the "closest" or "most similar" image to the OK sample from the NOK class. The masks show which pixels are changed and how in order for the OK result to be classified as a NOK image 1004 similar to the anchor.

Intuitively speaking, what this example reveals is that a moderate change in illumination in the centre portion of the weld body is the causal factor for the OK/NOK classification, along with the missing pin structure in the upper part of the picture. The softmax figure 1012 shows the classification output for the applied mask at each step during its optimization. A low softmax score refers to NOK image, a high softmax score refers to an OK image. The softmax trace reveals how the optimization crossed the decision boundary at around epoch 100. The loss 1010 is the quantity which the optimization process tries to maximize by changing the masks and in doing so, altering the input image. The activation loss 1011 measures the similarity between the result at each time step and the anchor. A low activation loss means the two are similar.

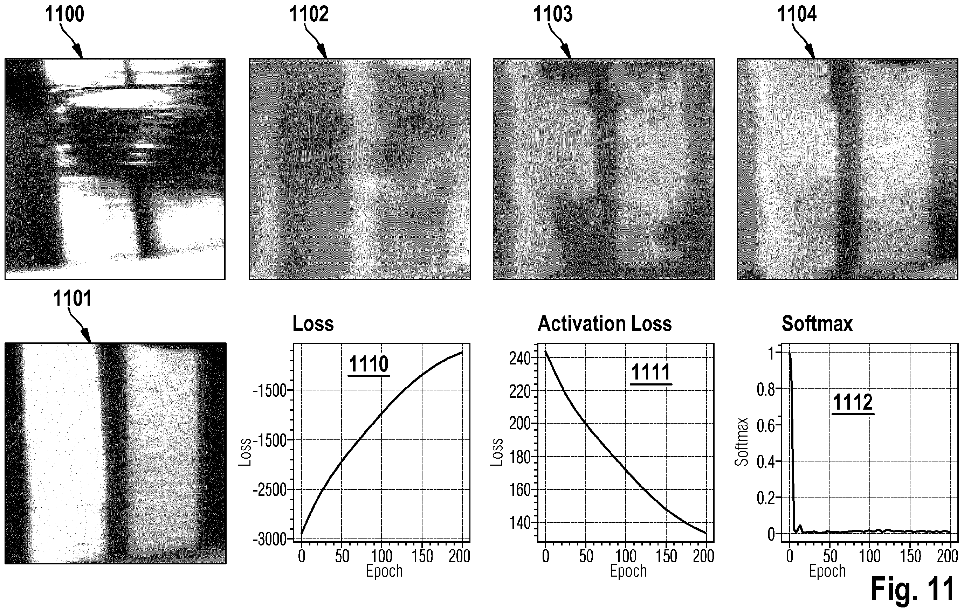

Fig. 11 shows the transformation of an OK sample 1100 into a NOK sample 1104 where welding has not started. This is a common type of NOK failure. This results in large but meaningful activations in the whitening mask 1103 and blackening mask 1102, which add white and black pixels to the OK sample 1100, respectively. These changes are learned in real time via an optimization procedure. The anchor 1101 was automatically chosen as the most similar image to the input sample from a dataset of NOK images where welding has not started.

The softmax figure 1112 shows the classification output for the applied mask at each step during its optimization. A low softmax score refers to a NOK image, a high softmax score refers to an OK image. The softmax curve shows a that the decision boundary was crossed relatively early in the optimization, showing that the model is susceptible to subtle intensity changes in key regions, here the welding structure that connect the pin to the housing. The loss 1110 is the quantity which the optimization process tries to maximize by changing the masks and in doing so, altering the input image. The activation loss 1111 measures the similarity between the result at each time step and the anchor. A low activation loss means the two are similar.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

**Claims**

1. A system (100) for processing an input instance, the system comprising:

   - a data interface (120) for accessing a trained model (040) and at least one anchor instance (060);
   - a processor subsystem (140) arranged to:

      - obtain the input instance and a classification of the input instance according to the trained model;
      - determine a mask for the input instance, the mask indicating modifications to the input instance relevant to the obtained classification, determining the mask comprising optimizing at least:

         - a classification score of a perturbed instance according to the trained model, the perturbed instance being obtained by applying the mask to the input instance, and
         - a difference between values of one or more latent features of the trained model applied to the perturbed instance and the values of the one or more latent features of the trained model applied to the at least one anchor instance.

2. System (100) according to claim 1, wherein the optimizing comprises minimizing the classification score and the difference between the values of the latent features.

3. System (100) according to any of the preceding claims, wherein determining the difference between the values of the latent features comprises determining an average value of a latent feature of the trained model over multiple anchor instances.

4. System (100) according to any of the preceding claims, wherein the at least one anchor instance (060) comprises one or more of: the input instance, an instance having the same classification as the input instance, and an instance having a different classification than the input instance.

5. System (100) according to any of the preceding claims, wherein the trained model (040) comprises a neural network, the one or more values of latent features comprising activations of nodes of the neural network.

6. System (100) according to any of the preceding claims, wherein the processor subsystem (140) is further configured to determine the at least one anchor instance (060), comprising selecting a candidate instance with a small a difference between values of one or more latent features of the trained model applied to the candidate instance and the values of the one or more latent features of the trained model applied to the input instance.

7. System (100) according to any of the preceding claims, wherein the trained model (040) is an image classifier.

8. System (100) according to claim 7, wherein the mask comprises a whitening mask for increasing an intensity of portions of the input image and a blackening mask for decreasing an intensity of portions of the input image, determining the mask comprising jointly optimizing the whitening mask and the blackening mask.

9. System (100) according to any of the preceding claims, wherein the input instance comprises sensor data, the system further comprises an input interface (150) for obtaining the sensor data from a sensor (170).

10. System (100) according to any of the preceding claims, wherein the system further comprises an output interface (160) for outputting the determined mask and/or the perturbed instance obtained by applying the determined mask to the input instance in a sensory perceptible manner to a user.

11. System (100) according to claim 10, wherein the processor subsystem (140) is further configured to obtain a desired classification of the perturbed instance from the user and re-train the trained model using the perturbed instance and the desired classification.

12. System (100) according to any of the preceding claims, wherein the input instance comprises a measurement of a product produced in a manufacturing process, the processor subsystem (140) being further configured to classify the mask into a predetermined set of possible anomalies.

13. System (100) according to claim 12, wherein the processor subsystem (140) is further configured to adjust at least one control parameter of the manufacturing process based on the classification of the mask.

14. A computer-implemented method (400) of processing an input instance, the method comprising:

   - accessing (410) a trained model and at least one anchor instance;
   - obtaining (420) the input instance and a classification of the input instance according to the trained model;
   - determining (430) a mask for the input instance, the mask indicating modifications to the input instance relevant to the obtained classification, determining the mask comprising optimizing at least:

      - a classification score of a perturbed instance according to the trained model, the perturbed instance being obtained by applying (440) the mask to the input instance, and
      - a difference computed (450) between one or more values of latent features of the trained model applied to the perturbed instance and the one or more values of the latent features of the trained model applied to the at least one anchor instance.

15. A computer-readable medium (500) comprising transitory or non-transitory data representing instructions arranged to cause a processor system to perform the computer-implemented method according to claim 14.

**Amended claims in accordance with Rule 137(2) EPC.**

1.   A system (100) for processing an input image, the system comprising:

- a data interface (120) for accessing a trained model (040), the trained model being an image classifier, and at least one anchor image (060);
- a processor subsystem (140) arranged to:
- obtain the input image and a classification of the input image according to the trained model;
- determine a mask for the input image, the mask indicating modifications to the input image relevant to the obtained classification, said mask being determined for providing an interpretability of the trained model, determining the mask comprising optimizing at least:

- a classification score of a perturbed image according to the trained model, the perturbed image being obtained by applying the mask to the input image, and
- a difference value measuring a difference between latent space activations of the trained model for the perturbed image and latent space activations of the trained model applied for the at least one anchor image.

2.   System according to claim 1, wherein the optimizing comprises minimizing a loss function including a loss term based on the difference value.

3.   System (100) according to claim 1 or 2, wherein the optimizing comprises minimizing the classification score and the difference between the values of the latent features.

4.   System (100) according to any of the preceding claims, wherein determining the difference between the values of the latent features comprises determining an average value of a latent feature of the trained model over multiple anchor images.

5.   System (100) according to any of the preceding claims, wherein the at least one anchor image (060) comprises one or more of: the input image, an image having the same classification as the input image, and an image having a different classification than the input image.

6.   System (100) according to any of the preceding claims, wherein the trained model (040) comprises a neural network, the one or more values of latent features comprising activations of nodes of the neural network.

7.   System (100) according to any of the preceding claims, wherein the processor subsystem (140) is further configured to determine the at least one anchor image (060), comprising selecting a candidate image with a small a difference between values of one or more latent features of the trained model applied to the candidate image and the values of the one or more latent features of the trained model applied to the input image.

8.   System (100) according to any one of the preceding claims, wherein the mask comprises a whitening mask for increasing an intensity of portions of the input image and a blackening mask for decreasing an intensity of portions of the input image, determining the mask comprising jointly optimizing the whitening mask and the blackening mask.

9.   System (100) according to any of the preceding claims, wherein the input image comprises sensor data, the system further comprises an input interface (150) for obtaining the sensor data from a sensor (170).

10.  System (100) according to any of the preceding claims, wherein the system further comprises an output interface (160) for outputting the determined mask and/or the perturbed image obtained by applying the determined mask to the input image in a sensory perceptible manner to a user.

11.  System (100) according to claim 10, wherein the processor subsystem (140) is further configured to obtain a desired classification of the perturbed image from the user and re-train the trained model using the perturbed image and the desired classification.

12.  System (100) according to any of the preceding claims, wherein the input image comprises a measurement of a product produced in a manufacturing process, the processor subsystem (140) being further configured to classify the mask into a predetermined set of possible anomalies.

13. System (100) according to claim 12, wherein the processor subsystem (140) is further configured to adjust at least one control parameter of the manufacturing process based on the classification of the mask.

14. A computer-implemented method (400) of processing an input image, the method comprising:

   - accessing (410) a trained model and at least one anchor image;
   - obtaining (420) the input image and a classification of the input image according to the trained model;
   - determining (430) a mask for the input image, the mask indicating modifications to the input image relevant to the obtained classification, said mask being determined for providing an interpretability of the trained model, determining the mask comprising optimizing at least:

      - a classification score of a perturbed image according to the trained model, the perturbed image being obtained by applying (440) the mask to the input image, and
      - a difference value computed (450) measuring a difference between latent space activations of the trained model for the perturbed image and latent space activations of the trained model for the at least one anchor image.

15. A computer-readable medium (500) comprising transitory or non-transitory data representing instructions arranged to cause a processor system to perform the computer-implemented method according to claim 14.

Fig. 1

Fig. 2

Fig. 3

EP 3 696 771 A1

400

410

420

430

440

450

Fig. 4

510

500

Fig. 5

Fig. 6

Fig. 7

Fig. 8

Fig. 9

Fig. 10

**Fig. 11**

# EP 3 696 771 A1

**Europäisches Patentamt**
**European Patent Office**
**Office européen des brevets**

# EUROPEAN SEARCH REPORT

Application Number

EP 19 15 6903

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/249547 A1 (SHRIKUMAR AVANTI [US] ET AL) 31 August 2017 (2017-08-31) <br> * abstract * <br> * paragraph [0003] - paragraph [0016] * <br> * paragraph [0036] - paragraph [0068]; figures 1A-6 * <br> * paragraph [0107] - paragraph [0127]; figures 8-10B * <br> * paragraph [0169] - paragraph [0172] * <br> ----- | 1-15 | INV. <br> G06T7/00 <br> G06N3/04 <br> G06N3/08 <br> G06N5/04 |
| X | SHI FENG ET AL: "Pathologies of Neural Models Make Interpretations Difficult", ARXIV.ORG, CORNELL UNIVERSITY LIBRARY, 201 OLIN LIBRARY CORNELL UNIVERSITY ITHACA, NY 14853, <br> 20 April 2018 (2018-04-20), XP081260203, <br> * abstract * <br> * sections 1-3; page 1 - page 6; figures 1-6 * <br> * section 6 * <br> ----- | 1-15 | |

TECHNICAL FIELDS SEARCHED (IPC)

G06T
G06N

The present search report has been drawn up for all claims

| Place of search | Date of completion of the search | Examiner |
|---|---|---|
| The Hague | 2 August 2019 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

27

## ANNEX TO THE EUROPEAN SEARCH REPORT
## ON EUROPEAN PATENT APPLICATION NO.

EP 19 15 6903

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2019

| Patent document cited in search report | Publication date | Patent family member(s) | Publication date |
|---|---|---|---|
| US 2017249547 A1 | 31-08-2017 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RUTH FONG ; ANDREA VEDALDI.** *Interpretable explanations of black boxes by meaningful perturbation,* 2017